# EUROPEAN PATENT APPLICATION

(11) **EP 4 219 969 A1**
(43) Date of publication of application: **02.08.2023**
(21) Application number: 23175048.0
(22) Date of filing: 20.11.2020
(51) Int. Cl.: F16C 33/10

(54) **METHOD FOR MANUFACTURING BUSHES AND BUSHES**

(30) Priority: 21.11.2019 IT 201900021780
(62) Divisional of application: 20208991.8
(71) Applicant: S.I.BO. S.r.l. - Societa' Italiana Boccole, 40012 Calderara di Reno (BO) (IT)
(72) Inventor: CALABRESE, Alberto, 40012 CALDERARA DI RENO (BO) (IT)
(74) Representative: Studio Torta S.p.A.

(57) **Abstract**

A method for manufacturing bushes (1), and bushes (1) having a tubular body (2) with a longitudinal axis (X) and an inner cavity (7); wherein the bush (1) has an inner surface (4) facing said inner cavity (7); on the inner surface (4) there is a pattern (10) composed of one or more geometrical shapes (11) and the inner surfacce further disclose protrusions (20), wherein said protrusions protrudes from said geometrical shapes (11) towards the inner of the cavity; wherein, each geometrical shape is formed by means of a single groove (12) or by means of a plurality of grooves (12).

## Description

### CROSS-REFERENCE TO RELATED APPLICATIONS

This patent application claims priority from Italian patent application no. 102019000021780 filed on November 21, 2019.

### TECHNICAL FIELD

The present invention relates to a method for manufacturing bushes and to bushes.

Bushes are mechanical components of tubular shape with a cylindrical cross-section generally used for manufacturing high-fatigue-strength, turning kinematic pairs. The shape, material and size of a bush depend on the type of application.

In particular, the present invention relates to bushes to be applied in construction machines, such as earthmoving machines or the like.

Generally, in construction machines, bushes are used for the articulation of mechanical arms. In fact, in addition to being able to guarantee the rotation of one component relative to another, bushes can also guarantee high mechanical strength. Therefore, bushes are particularly suitable for being installed at turning pairs which must have high fatigue strength.

### PRIOR ART

Bushes are known to comprise an internally hollow tubular body with a longitudinal axis. The tubular body is configured to be fitted, in use, on a shaft.

A bush and a shaft are coupled so as to be mutually rotatable relative to each other, generally around the longitudinal axis of the bush, which, in use, is substantially coaxial with the axis of the shaft.

During rotation, the inner surface of the bush and the shaft rub against each other. To prevent seizure during use and ensure a longer life to the kinematic pair, it is advisable to apply a lubricating material to the inner surface of the bush which, in use, rubs against the shaft.

It is known that bushes have one or more grease grooves made on the inner surface thereof. Each grease groove is configured to house, in use, a lubricating material.

Grooves of known types are generally made by means of machine tools for chip removal, for example by means of a lathe. It is known that a lathe comprises a cutting body which is slid longitudinally along the longitudinal axis of the bush, while a reciprocal rotation between the cutting body and the bush also takes place simultaneously. Therefore, in most cases, the inner grooves of a bush are helical in shape or extend along linear trajectories, along the longitudinal axis of the bush. This has several disadvantages, including:
- the shapes of the grooves that can be created must extend along linear trajectories;
- the shape of the grooves favours the flow, during use, of the lubricating material towards the outside of the bush, therefore requiring frequent maintenance to grease the grooves.

It is also known to provide bushes which have recesses (in place of or in addition to the grooves) to collect the lubricating material locally. This allows the creation of lubricating material collection areas to favour greater localized greasing and extend the period of time between one maintenance activity and the next.

However, this type of solution has the disadvantage of creating weakening areas in the bush, in fact, at the recesses, the thickness of the bush is less than in other areas, for example at the grooves. Lastly, this type of solution involves placing a greater quantity of lubricant at the recesses compared to the adjacent parts. This results in a difference between the bush and the shaft in the distribution of the lubricating material.

### DESCRIPTION OF THE INVENTION

It is an object of the present invention to provide a method for manufacturing bushes, and bushes, which overcome the drawbacks described above.

According to the present invention, there is provided a method as mentioned in the appended claims.

According to the present invention, there is provided a bush as mentioned in the appended claims.

### BRIEF DESCRIPTION OF THE DRAWINGS

The invention will now be described with reference to the accompanying drawings, which illustrate non-limiting embodiments thereof:
- Figure 1 is a perspective view of a first example of a bush according to the present invention;
- Figure 2 is a longitudinal section of the bush in Figure 1;
- Figures 3 to 6 are similar to Figure 2 and show respective different examples of a bush 1 according to the present invention;
- Figure 7 is similar to Figure 1 and shows a variant of the bush 1 in Figure 1; and
- Figure 8 is similar to Figure 7 and shows a further variant of the bush 1 in Figure 1;
- Figure 9 is a perspective view of a further variant of a bush according to the present invention;
- Figure 10 is a longitudinal section of the bush in Figure 9;
- Figure 11 is an enlargement of an enlarged detail in Figure 10;
- Figure 12 is a perspective view of a further embodiment of a bush according to the present invention;

- Figure 13 is a longitudinal section of the bush in Figure 12; and
- Figure 14 is an enlarged detail of Figure 13.

### PREFERRED EMBODIMENT OF THE INVENTION

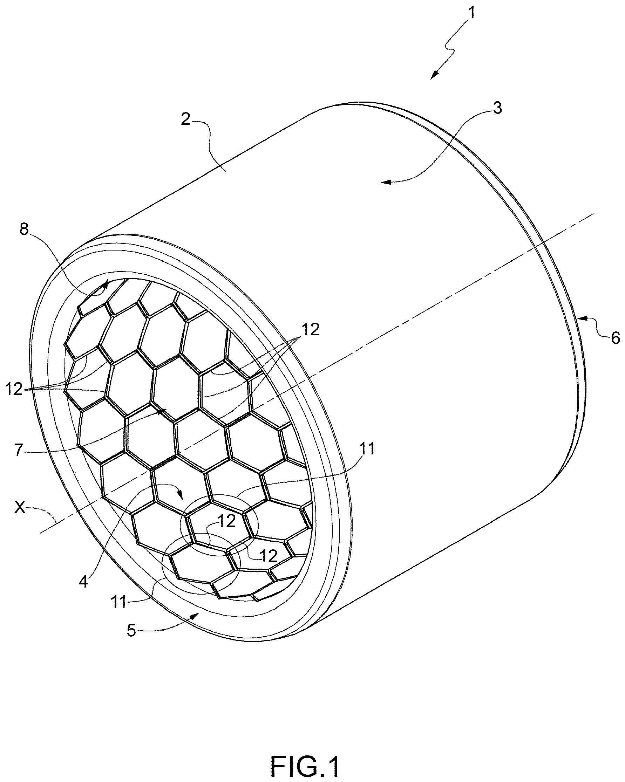

Number 1 in Figure 1 indicates, as a whole, a bush 1 according to the present invention.

The bush 1 comprises a tubular body 2 having a longitudinal axis X. In particular, the tubular body 2 of the bush 1 has a circular cross-section. The tubular body 2 is radially delimited, with respect to the longitudinal axis X, by an outer surface 3, an inner surface 4. The tubular body 2 is axially delimited along the longitudinal axis X by a head surface 5 and a back surface 6.

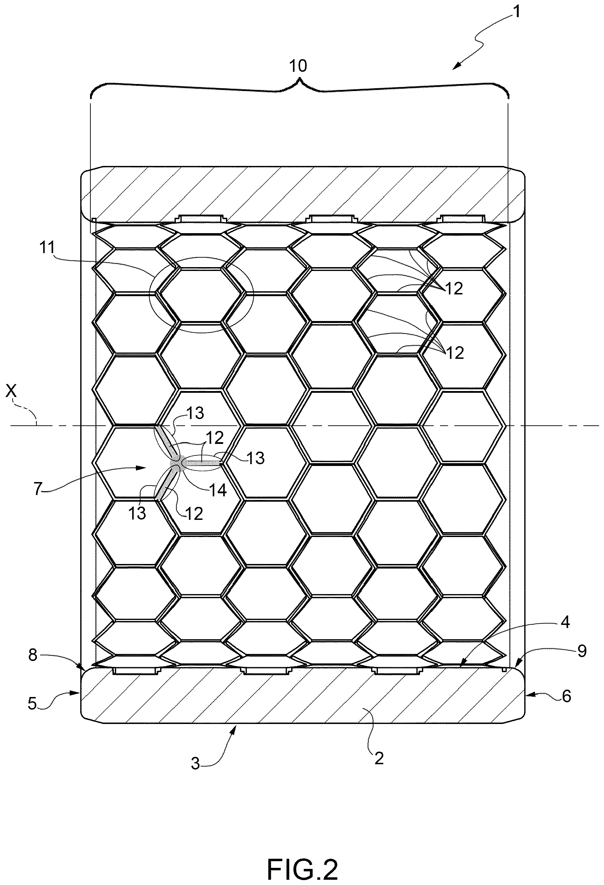

The bush 1 has an inner cavity 7 which axially passes through the tubular body 2 and gives onto the outside of the tubular body 2 from the head surface 5 through a head opening 8, and from the back surface 6 through a back opening 9, respectively (Figure 2).

Advantageously, the bush 1 according to the present invention has a pattern 10 (shown in greater detail in the shapes 2 to 6) on the inner surface 4. The pattern 10 is composed of the repetition of one or more geometrical shapes 11.

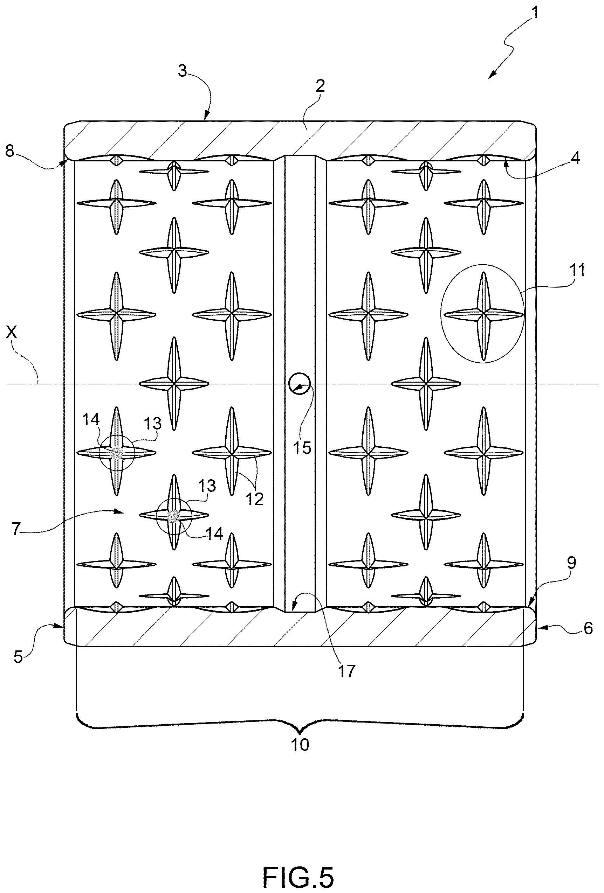

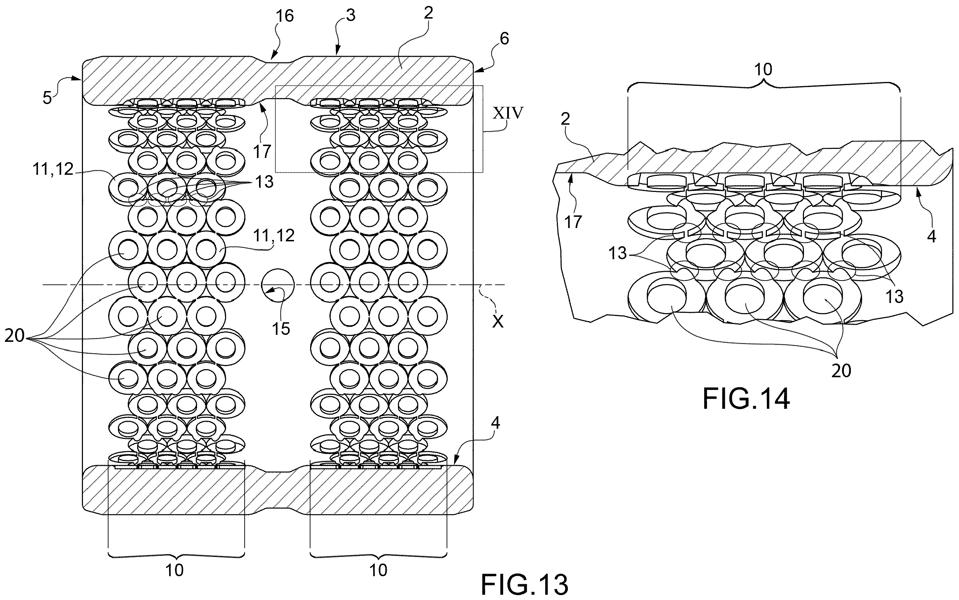

According to the examples shown in Figures 5 to 14, the bush 1 comprises a plurality of patterns 10 formed in two respective areas of the bush 1. According to the examples shown in Figures 5 to 14, there are two patterns 10 longitudinally separated by an inner annular gap 15, as will be better illustrated below. According to a variant, not shown, the number and arrangement of the patterns 10 can be different depending on the intended use of the bush 1.

Each geometrical shape 11 is formed on the inner surface 4 of the bush 1.

Each geometrical shape 11 is composed of one or more grooves 12.

According to the embodiment shown in Figures 1 to 8, each geometrical shape 11 is composed of a plurality of grooves 12.

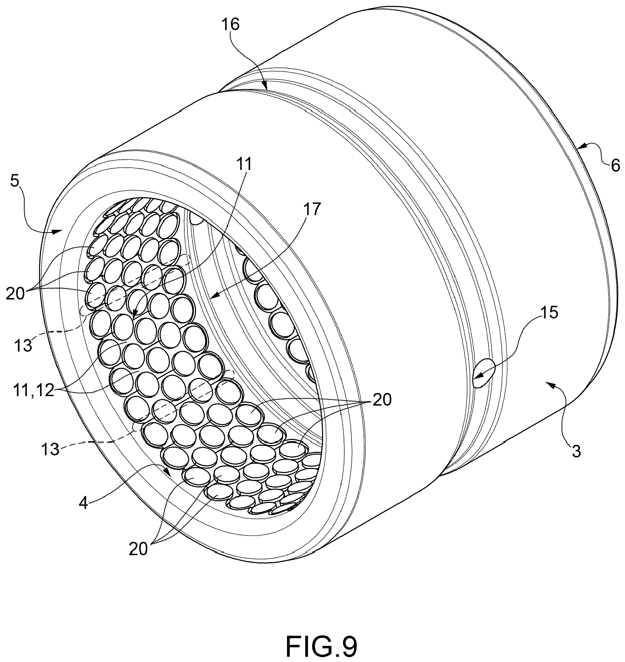

According to the embodiment shown in Figures 9 to 14, each geometrical shape 11 is composed of a single groove 12. In other words, the groove 12 and the shape 11 coincide.

Each groove 12 is substantially an area of the bush 1 of lesser thickness than a surrounding area. Each groove 12 may be rectilinear and/or curvilinear. In other words, each groove 12 has a straight, curved or mixed linear pattern.

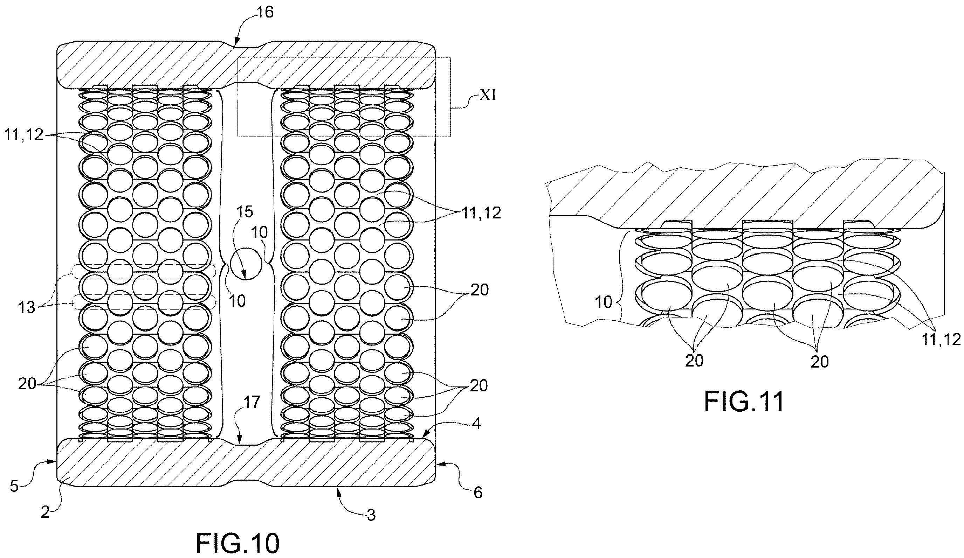

According to the examples shown in Figures 1 to 11, each groove 12 is rectilinear. According to the examples shown in Figures 11 to 13, each groove 12 is curvilinear.

According to the examples shown in Figures 1 to 7, each groove 12 is substantially a segment composing a corresponding side of the geometrical shape 11 itself. For each geometrical shape 11, the grooves 12 are combined in a prefixed order.
According to some embodiments (Figures 1 to 5, 7-11), the grooves 12 of two adjacent geometrical shapes 11 coincide (i.e., two adjacent geometrical shapes 11 have the same groove 12 in common) or are at least partially in contact with each other. In other words, lubricating material may pass from a groove 12 of one geometrical shape 11 to the groove 12 of an adjacent geometrical shape 11 at an intersection area 13.

Advantageously, the joining of the grooves 12 of three or more adjacent geometrical shapes 11 forms a junction 14, i.e., a discontinuity area. According to the example shown in Figures 1 to 3, three adjacent geometrical shapes 11 form a junction 14 at which three grooves 12 are incident to each other.

According to the examples shown in Figures 1 to 3, 7 and 8, a geometrical shape 11 may be polygonal, i.e., have the shape of a polygon. The term polygonal/polygon is intended to mean: a geometrical shape which extends over a surface and is delimited by segments (in this case the grooves 12) arranged so that each one, excluding the first segment and the last segment, has one end in common with the preceding segment and the other end in common with the next segment.

According to the examples shown in Figures 1 to 3, 7 and 8, for a polygonal geometrical shape 11, a groove 12 corresponds to a respective segment of the polygon.

According to the example shown in shapes 1 to 3, each geometrical shape 11 is a closed polygon. Closed polygon means a polygon in which the first and the last segment (or grooves 12) coincide with each other.

According to the example shown in shapes 1 and 2, the pattern 10 is composed of the repetition of a single geometrical shape 11. In particular, in the illustrated example, the geometrical shape 11 is a hexagon.

According to a variant, not shown, the geometrical shape 11 can be another type of closed polygon with a different number of sides (greater than or equal to three sides).

According to the examples shown in Figures 1 to 3, 7 and 8, a geometrical shape 11 of the pattern 10 is a closed polygon with more than 4 sides, i.e., with five or more sides; this ensures the presence of at least one side which does not lie on a helical trajectory around the longitudinal axis X of the bush 1.

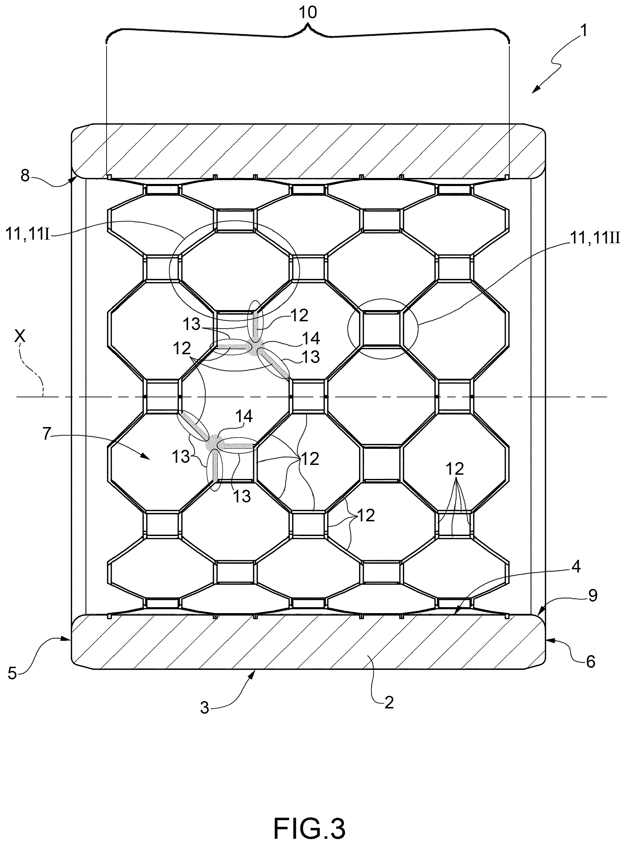

According to the example shown in Figure 3, the pattern 10 is composed of the repetition of two different geometrical shapes 11I and 11II. In particular, in the example shown in Figure 3, the pattern 10 is composed of the repetition of an octagon (11I) and a square (1111).

According to a variant, not shown, the pattern 10 is composed of any combination of two different polygonal geometrical shapes 11.

According to a variant, not shown, one geometrical shape 11 can be an open polygon. Open polygon means a polygon in which the first and the last segment (in this case the grooves 12) do not coincide with each other.

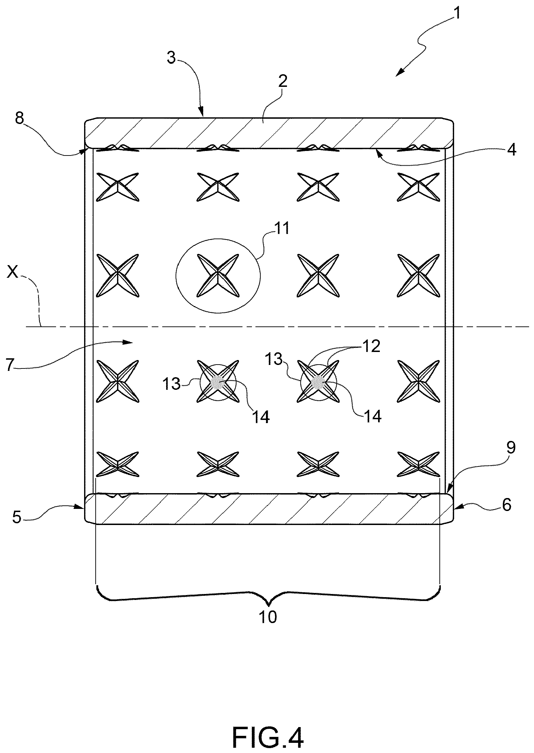

According to the variant shown in Figure 4, the adjacent geometrical shapes 11 are not in contact with each other, i.e., they are not coincident and/or do not intersect with each other. According to the variant shown in Figure 4, the geometrical shape 11 is a star polygon. Star polygon means a star-shaped polygon. In particular, the star shape is generated by the intersection of several grooves 12. In the example shown in Figure 4, the junction 14 is created by the intersection/incidence of two or more grooves 12 of the same geometrical shape 11.

Figure 5 shows a variant similar to Figure 4, differing from Figure 4 in the angles of the grooves 12 of the geometrical shape 11 with respect to the longitudinal axis X of the bush 1.

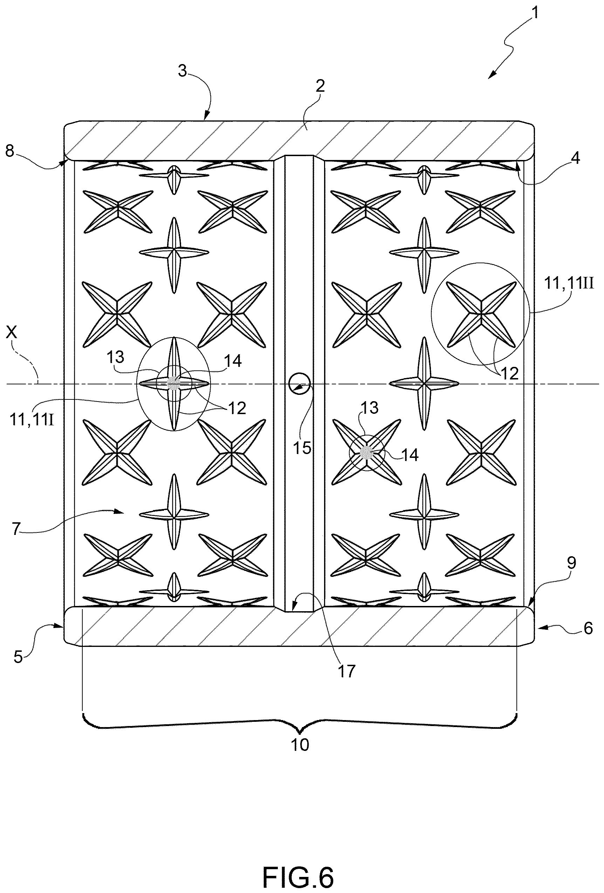

According to the variant shown in Figure 6, the pattern 10 is composed of two similar geometrical shapes 11, which differ from each other in the angles of the respective grooves 12 with respect to the longitudinal axis X of the bush 1. In particular, the pattern 10 is composed of the same polygonal star geometrical shape 11. According to the example shown in Figure 4, each groove 12 forms an angle of approximately 45° or -45° with the longitudinal axis X of the bush. According to the example shown in Figure 5, each groove 12 forms an angle of 0° or 90° with respect to the longitudinal axis X.

According to a variant, not shown, the pattern 10 is composed of the repetition of three or more geometrical shapes 11 different from each other in terms of: type (open/closed/star-shaped polygon); and/or in the number of grooves 12 (or segments); and/or in the angles of the grooves 12 of each geometrical shape 11 with respect to the longitudinal axis X of the bush 1.

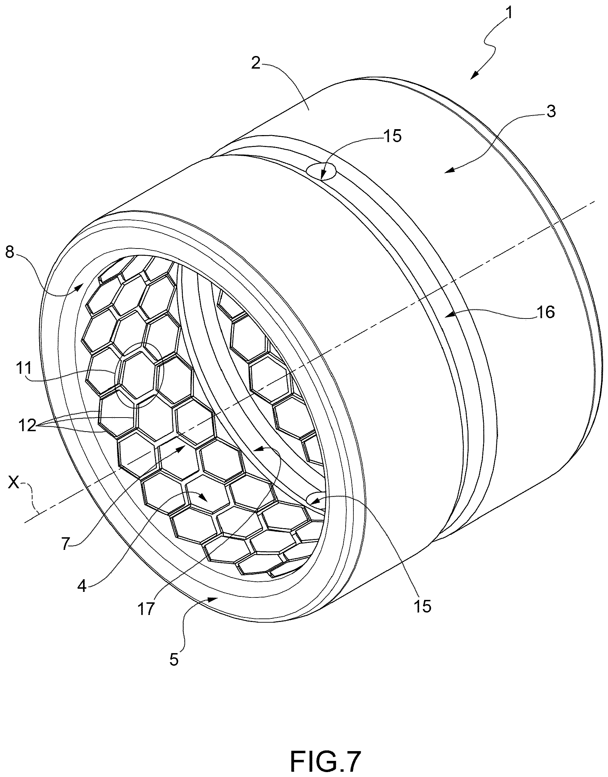

According to the variant shown in Figure 7, the bush 1 can comprise, in a known way, a grease channel 15 which connects the inner cavity 7 to the outside. The grease channel 15 is a hole which radially and transversely passes through the tubular body 2 and connects the inner surface 4 to the outside. As shown, the bush 1 also has an outer annular gap 16 and an inner annular gap 17. The grease channel 15 passes through the tubular body 2 and, at one end, gives onto the inside of the outer annular gap 16, and at the other end, onto the inside of the inner annular gap 17. Advantageously and in a known manner, the outer annular gap 16 is configured, in use, to be put in communication with a source of lubricating material. In this case, greasing operations can be performed by feeding the lubricating material inside the pattern 10 through the outer annular gap 16, the grease channel 15 and the inner annular gap 17.

Without losing generality, obviously, the pattern 10 of the bush 1 shown in Figure 7 can be different from that illustrated (providing all the variants described above).

According to the example shown in Figure 6, the bush 1 can be devoid of the outer annular gap 16, in which case the lubricating material is introduced directly into the grease channel 15. According to a variant, not shown, the bush 1 lacks the inner annular gap 17, and the grease channel 15 is directly in communication with the pattern 10.

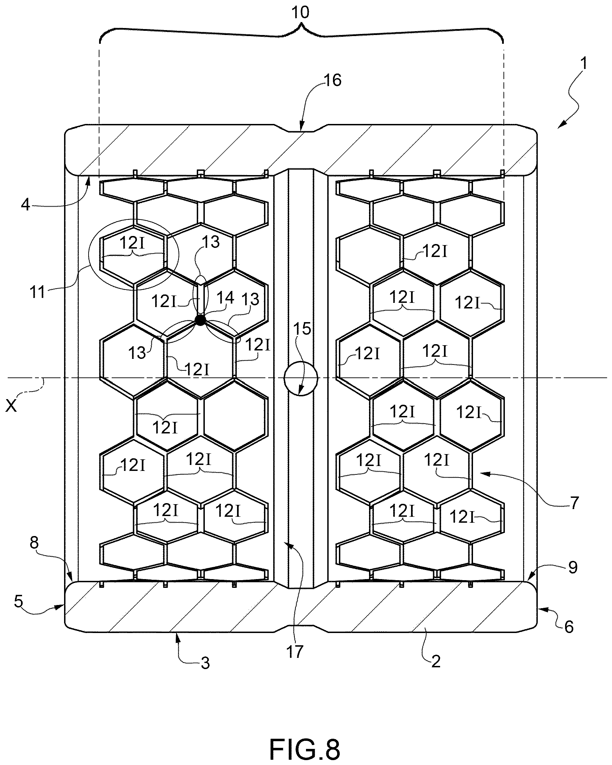

According to the variant shown in Figure 8, at least one geometrical shape 11 has a groove 121 transverse to the longitudinal axis X, that is, following a circumferential trajectory coaxial with the longitudinal axis X and extending in a plane perpendicular to the axis X. In this way, advantageously, a transverse groove 12I acts as an interruption of any flow of lubricating material along the longitudinal axis X. Moreover, advantageously, providing grooves 12 transverse to the longitudinal axis X allows, in use, better support to a shaft on which the bush 1 is fitted. In this case, advantageously, along the longitudinal axis X no large or wide areas are created along which the shaft is not supported by the bush 1. In other words, along the longitudinal axis X, the empty spaces between the bush 1 and the shaft are reduced. Therefore, this allows greater tightness between the bush 1 and the shaft and a more uniform distribution of the loads on the shaft during use, with the consequent improvement of the general conditions of use of the shaft.

Without losing generality, obviously, the pattern 10 of the bush 1 shown in Figure 8 can be different from that illustrated (providing all the variants described above).

According to the embodiment shown in Figures 9 to 11, each geometrical shape 11 is composed of a single groove 12. In the example shown in Figures 9 to 11, each groove 12 extends parallel to the longitudinal axis X. In the example shown, the grooves 12 are rectilinear and have rounded ends. Two adjacent grooves 12 are in contact with each other substantially for the entire extension along the longitudinal axis X, in this way, advantageously, the pattern 10 is composed of an annular area, the extension of which along the longitudinal axis X is substantially a function of the length of the grooves 12. Advantageously, in the example shown in Figures 9 to 11, the bush 11 comprises one or more protrusions 20 protruding inside each pattern 10. In this way, at each protrusion 20, the thickness of the bush 1 is increased to a predefined value. According to the example of Figures 9 to 11, the bush 1 has a plurality of protrusions 20, which are identical to each other, uniformly distributed (with a quincunx distribution), and substantially cylindrical in shape.

According to a variant, not shown, the number and shape of the protrusions can be different, in particular it can be noted that the protrusions of a same bush 1 may have geometrical shapes different from each other and different from those illustrated.

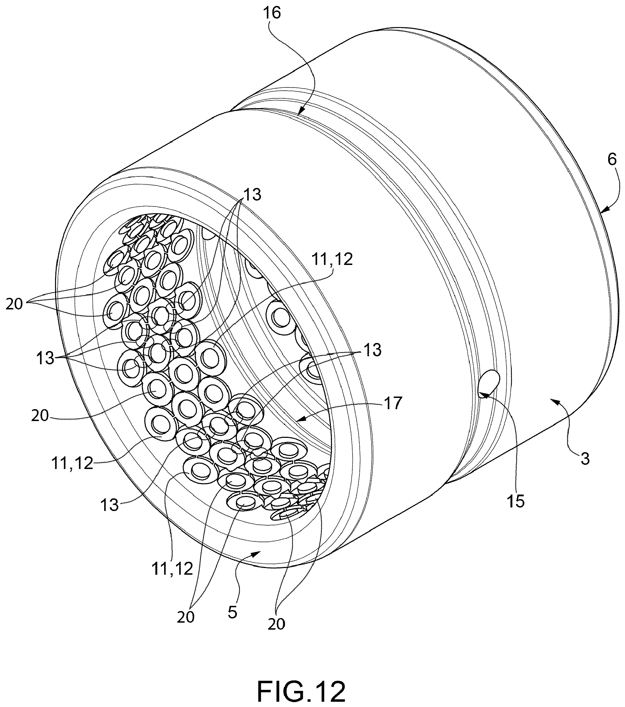

According to the example shown in Figures 12 to 14, each geometrical shape 11 is composed of a single circular groove 12. In particular, according to the example in Figures 12 to 14, the pattern 10 of a bush 11 is composed of the repetition of a plurality of circular grooves 12.

Advantageously, two adjacent grooves 12 are in contact with each other at an intersection area 13.

According to a variant, not shown, a pattern could comprise a combination of both circular and linear grooves. A bush 1 of the type described above can be made by machining (for example, by means of a material removal process, and/or laser cutting) and/or by means of additive manufacturing techniques; and/or by overlapping a plurality of bent metal sheets; and/or by electro erosion.

In any case, the method according to the present invention advantageously comprises creating on the inner surface 4 of the bush 1 a pattern 10 composed of one or more geometrical shapes 11. In particular, advantageously, the method according to the present invention comprises creating patterns by the repetition of complex or closed and/or open and/or star-shaped polygonal geometrical shapes 11.

Without losing generality, the method according to the present invention can comprise, in a known way, thermal and/or chemical treatments of the bush 1 in any working step (before or after the creation of the pattern 10).

It follows from the above that a bush 1 according to the present invention advantageously has one or more patterns 10 composed of one or more complex or polygonal geometrical shapes 11.

Advantageously, in case of patterns 10 composed of adjacent geometrical shapes 11, as in the examples shown in Figures 1 to 3, 7 and 8, the grooves 12 of three or more adjacent polygonal geometrical shapes 11 cross each other at a junction 14, namely a discontinuity area. In other words, there is no continuity between the grooves 12 (or sides) of three or more adjacent (polygonal) geometrical shapes 11.

Advantageously, the presence of junctions 14 allows the creation of a crooked path for the lubricating material. In this way, advantageously, during use, the lubricating material is trapped inside the bush 1 to a greater extent, making its outflow more difficult. This has the advantage of extending the time between one maintenance activity and the next, while ensuring the correct operation of the bush 1.

Advantageously, a pattern 10 of the type described above allows the working volume of the grooves 12 for housing the lubricating material to be increased, while maintaining the same surface area. This has the advantage of being able to distribute greater quantities of lubricating material with the same dimensions of the bush 1 and, consequently, to lengthen the time between one maintenance activity and the next.

Advantageously, a pattern 10 of the type described above makes it possible to make grooves 12 which are less deep than the recesses currently used as a material reservoir. This makes it possible to guarantee, for the same geometrical dimensions and materials of which the bush 1 is made, a greater fatigue strength.

Advantageously, according to the examples shown in Figures 9 to 14, the geometrical shapes 11 do not give onto the outside of the bush through the head surface 5 and the back surface 6. In other words, the grooves 12 are only formed inside the body of the bush 1. In this way, the flow of the lubricating material towards the outside is hindered.

Therefore, advantageously, a method and a bush 1 according to the present invention can provide a product which, compared to the known bushes, can guarantee: a longer fatigue strength; a greater applicable amount of lubricating material; longer time between maintenance operations.

## Claims

1. A method for manufacturing bushes (1) with a tubular body (2) having a longitudinal axis (X) and an inner cavity (7); each bush (1) having an inner surface (4) facing said cavity (7); wherein the method comprises creating on said inner surface (4) a pattern (10) comprising one or more geometrical shapes (11) and respective portions, in particular protrusion (20), of the tubular body (2); wherein said portions of the tubular body (2) protrudes from said geometrical shapes (11) towards the inner of the cavity (7); wherein, each geometrical shape (11) is formed by means of a single groove (12) or by means of a plurality of grooves (12) .

2. A method according to claim 1, wherein, in order to create a pattern (10), the method comprises delimiting, by means of one or more grooves (12), one or more respective portions of the tubular body (2), in particular protrusions (20); each portion of the tubular body (2) being configured to be put, in use, in contact with a shaft.

3. A method according to claim 1 or 2, wherein, in order to create a pattern (10), the method comprises realizing a plurality of circular grooves (12); wherein each portion of the tubular body (2), in particular each protrusion (20), is laterally delimited by a respective groove (12).

4. A method according to claim 3, wherein to create a pattern (10) the method comprises to realize between two adjacent circular grooves (12) an intersection zone (13), which puts in fluidical communication said two grooves (12).

5. A method according to claim 1 or 2, wherein to create a pattern (10) the method comprises to realize: a plurality of linear grooves (12) parallel to the longitudinal axis (X); and, for each groove (12), a plurality of protrusions (12) distributed along the longitudinal axis (X) .

6. A method according to claim 5, wherein during the step of creating a pattern (10), the protrusions (20) of two adjacent grooves (12) are realized so as to be tilted relative to each other in respect to the longitudinal axis (X) to obtain a substantially quiconce shaped distribution.

7. A method according to any of the preceding claims, wherein the pattern (10) is created by machining, in particular by means of a material removal process, and/or laser cutting and/or by means of additive manufacturing and/or by overlapping a plurality of bent metal sheets and/or electro erosion.

8. A bush comprising a tubular body (2) and having a longitudinal axis (X), an inner cavity (7) and an inner surface (4) facing said cavity (7); wherein, the bush (1) has on said inner surface (4) a pattern (10) composed of one or more geometrical shapes (11) and respective portions, in particular protrusion (20), of the tubular body (2); wherein said portions of the tubular body (2) protrudes from said geometrical shapes (11) towards the inner of the cavity (7); wherein, each geometrical shape (11) is formed by means of a single groove (12) or by means of a plurality of grooves (12) .

9. A bush according to claim 8, wherein each portion, in particular protrusion (20), of the tubular body (2) is configured to be put, in use, in contact with a shaft.

10. A bush according to claim 8 or 9, wherein the pattern (10) comprises a plurality of circular grooves (12); wherein each portion of the tubular body (2), in particular each protrusion (20), is laterally delimited by a respective groove (12).

11. A bush according to claim 10, wherein an intersection zone (13) is present between two adjacent circular grooves (12); the intersection zone (13) puts in fluidical communication said two grooves (12).

12. A bush according to claim 8 or 9, wherein the pattern (10) comprises: a plurality of linear grooves (12) parallel to the longitudinal axis (X); and, for each groove (12), a plurality of protrusions (20) distributed along the longitudinal axis (X).

13. A bush according to claim 12, wherein the protrusions (20) of two adjacent grooves (12) are realized so as to be tilted relative to each other in respect to the longitudinal axis (X) to obtain a substantially quiconce shaped distribution.

14. A bush according to any of the preceding claims, wherein said portion, in particular protrusion (20), of said tubular body (2) is cylindrical.
